# EUROPÄISCHE PATENTSCHRIFT

(11) **EP 2 650 095 B1**
(45) Veröffentlichungstag und Bekanntmachung des Hinweises auf die Patenterteilung: **11.02.2015**
(21) Anmeldenummer: 13162243.3
(22) Anmeldetag: 04.04.2013
(51) Int. Cl.: B29B 13/02, A24D 3/02, B05C 11/10, B29K 105/00

(54) **Heißleimschmelzvorrichtung**
Hot glue melting device
Dispositif de fusion de colle chaude

(30) Priorität: 13.04.2012 DE 102012206104
(43) Veröffentlichungstag der Anmeldung: 16.10.2013
(73) Patentinhaber: HAUNI Maschinenbau AG, 21033 Hamburg (DE)
(72) Erfinder: Bohmke, Wadim, 23909 Ratzeburg (DE); Theivogt, Klaus, 23879 Mölln (DE); Kiprowski, Carsten, 19306 Neustadt-Glewe (DE)
(74) Vertreter: Müller Verweyen

(56) Entgegenhaltungen:
- EP-A1- 0 055 306
- EP-A2- 0 220 529
- EP-A2- 0 286 065
- EP-A2- 0 353 792
- WO-A1-2013/070698
- DE-T2- 69 904 215
- JP-A- H11 165 112
- US-A- 5 657 904
- US-A1- 2008 302 477

## Beschreibung

Die Erfindung betrifft eine Heißleimschmelzvorrichtung mit den Merkmalen des Oberbegriffs von Anspruch 1.

Heißleim (auch Hotmelt genannt) wird in Produkten der Tabak verarbeitenden Industrie, insbesondere in Filtern grundsätzlich dazu verwendet, das Filterpapier zur Fixierung der Produkte an den Rändern aneinander zu verkleben, wodurch der Filter in sich und zu dem Tabakstrang fixiert wird.

Heißleimschmelzvorrichtungen der gattungsgemäßen Art werden dazu verwendet, den Heißleim, welcher zum Verkleben auf das Filterpapier der Produkte aufgetragen wird, in einem vorbereitenden Verarbeitungsprozess aus festem Granulat aufzuschmelzen. Die Heißleimschmelzvorrichtung umfasst unter anderem einen Heißleimschmelzbehälter mit einer den Heißleimschmelzbehälter umfassenden Heizeinrichtung. Der Heißleimgrundwerkstoff wird als Granulat in den Heißleimschmelzbehälter eingefüllt und durch die Heizeinrichtung von außen durch die Wandung des Heißleimschmelzbehälters erhitzt und aufgeschmolzen. Der aufgeschmolzene Heißleim wird aus der Heißleimschmelzvorrichtung mittels einer Fördereinrichtung einer Auftragsvorrichtung zugeführt, in der der Heißleim über eine Düse in flüssigem Zustand auf das Filterpapier aufgetragen wird. Der Heißleim selbst ist ein hydrophober Schmelzklebstoff, der bei niedrigen Temperaturen (Raumtemperatur 20 Grad Celsius) fest und nicht klebend ist und aus thermoplastischen Polymeren besteht. Aufgrund der von der Heizeinrichtung erzeugten und durch die Wandung des Heißleimschmelzbehälters von außen zugeführten Wärme schmilzt das Granulat oder die erkaltete von einem vorangegangenen Verarbeitungsprozess noch übrig gebliebene Heißleimmasse beim Anfahren der Heißleimschmelzvorrichtung von außen nach innen auf, wobei die Aufheizphase bis zum Aufschmelzen einer für den Betrieb der gesamten Anlage ausreichenden Menge von Heißleim bis zu 30 Minuten dauern kann. Dabei ist es von Nachteil, dass der Heißleim selbst eine sehr geringe Wärmeleitfähigkeit aufweist, also praktisch als Isolator angesehen werden kann, und es dadurch verhältnismäßig lange dauert, bis der Heißleim auch in der Mitte des Schmelztopfes aufschmilzt. Infolgedessen ist es nicht zu vermeiden, dass der Heißleim unter ungünstigen Umständen in der Mitte des Schmelztopfes nicht vollständig aufgeschmolzen wird und stattdessen auch nach längerem Betrieb der Heißleimschmelzvorrichtung in der Mitte der Heißleimmasse noch zu einem festen Klumpen verklebt ist.

Für den Fall, dass der Heißleim wiederholt aufgeschmolzen wird und dadurch zu lange thermisch beansprucht wird, besteht außerdem die Gefahr, dass der Heißleim "crackt", dass heißt die Polymere des Heißleims zersetzen sich, wodurch Ablagerungen an der beheizten Oberfläche der Heißleimschmelze entstehen. Diese Ablagerungen wirken isolierend, so dass das Aufschmelzen weiter verzögert wird. Außerdem kann der Heißleim durch die Ablagerungen optisch verfärbt werden.

Außerdem kann die Heizleistung der Heizeinrichtung grundsätzlich nicht beliebig hoch gewählt werden, da der Heißleim in diesem Fall nicht homogen aufgeschmolzen wird, und der Heißleim in der an der Wandung des Heißleimschmelzbehälters angrenzenden Randzone übermäßig stark erhitzt wird und dadurch ebenfalls "cracken" kann. Um das "cracken" zu verhindern, sollte der Heißleim in der Heißleimschmelzvorrichtung in einem Temperaturbereich zwischen 125 und 180 Grad Celsius aufgeschmolzen werden.

Der Schmelzvorgang des Granulats beginnt je nach Leimsorte bei 27 - 40 Grad Celsius und endet bei einer Temperatur von 70 - 110 Grad Celsius. Der Heißleim wird als Granulat mit einer bestimmten Schüttgutdichte in den Heißleimschmelzbehälter eingefüllt. Die Granulatteilchen des Heißleims schmelzen in einer ersten Phase des Aufschmelzens an den Oberflächen zusammen, so dass sich eine Vielzahl von durch die Form des Granulats bedingten Lufteinschlüssen zwischen den Granulatteilchen bilden, welche unter ungünstigen Umständen in der Heißleimschmelze verbleiben können. Der aufgeschmolzene Heißleim ist eine zähe Masse mit einer Viskosität ähnlich der von Honig, wodurch sich die Lufteinschlüsse in der Heißleimschmelze grundsätzlich nur sehr langsam bewegen können. Da Luft ebenfalls einen sehr geringen Wärmeleitkoeffizienten aufweist, wird der Aufschmelzvorgang durch die Lufteinschlüsse weiter verlangsamt.

Ferner muss der Heißleimschmelzbehälter zur Aufnahme des Granulats ein bestimmtes Volumen aufweisen, welches in bisher verwendeten Heißleimschmelzvorrichtungen ca. 9 l beträgt, damit die Befüllungsintervalle des Heißleimschmelzbehälters nicht zu kurz sind. Bei einem Füllvolumen von 9 l muss der Heißleimschmelzbehälter je nach der Verwendung der Einrichtung in einer Einstrang- oder Mehrstrangmaschine und der Verwendung von Standard- oder Multifiltern alle 20 Minuten bis jede Stunde manuell mit Granulat aufgefüllt werden.

Aus der DE 66 07 497 ist eine Vorrichtung zum Schmelzen von thermoplastischen Kunststoffen bekannt, welche eine perforierte Heizplatte als Heizeinrichtung aufweist. Der Schrift ist nicht zu entnehmen, wie die Heizplatte beheizt wird.

Des Weiteren wird nach auf die JP 11165112 A und die DE 69904215 T2 verwiesen.

Aufgabe der Erfindung ist es daher, eine Heißleimschmelzvorrichtung mit einem Schmelzrost bereitzustellen, welche konstruktiv einfach aufgebaut und kostengünstig herzustellen sein soll.

Zur Lösung der Aufgabe wird eine Heißleimschmelzvorrichtung mit den Merkmalen von Anspruch 1 vorgeschlagen. Weitere bevorzugte Weiterentwicklungen der Erfindung sind den Unteransprüchen, den Figuren und der zugehörigen Beschreibung zu entnehmen.

Gemäß dem Grundgedanken der Erfindung wird vorgeschlagen, dass der Schmelzrost aus zwei übereinander angeordneten Platten gebildet ist, und eine der Platten wenigstens eine Ausnehmung aufweist, in der die Heizeinrichtung angeordnet ist, und die jeweils andere Platte die Ausnehmung mit der darin angeordneten Heizeinrichtung abdeckt. Der Schmelzrost wird dadurch von innen her erwärmt, so dass die Wärme mit möglichst geringen Verlusten und möglichst nahe zu dem aufliegenden und aufzuschmelzenden Heißleim in den Schmelzrost eingebracht wird. Aufgrund der vorgeschlagenen Ausbildung des Schmelzrostes mit den zwei Platten und der zwischen den Platten liegenden Heizeinrichtung kann die Heizeinrichtung auf sehr einfache konstruktive Art und Weise in dem Schmelzrost angeordnet werden, ohne dass dazu ein aufwendiges Herstellverfahren erforderlich ist, oder die Heizeinrichtung selbst besonders ausgeführt sein muss. Die Ausnehmung ist dabei derart angeordnet, dass sie von außen zugänglich ist, indem die Ausnehmung z.B. in den radial äußeren Rand des Schmelzrostes mündet. Dadurch kann die Heizeinrichtung mit einem Anschlussabschnitt nach außen geführt werden und auch bei einer aneinander anliegenden Anordnung der Platten von außen kontaktiert werden.

Weiter wird vorgeschlagen, dass der Heißleim in Form von Granulatteilchen zugeführt wird, und die Durchtrittsöffnungen eine Öffnungsweite aufweisen, welche dem 0,3 bis 0,8-fachen der kleinsten Abmessung der Granulatteilchen entspricht. Als kleinste Abmessung der Granulatteilchen wird die Breite, die Dicke oder die Länge der Granulatteilchen angesehen, welche jeweils den kleinsten Wert aufweist. Durch die vorgeschlagene Weite der Durchtrittsöffnungen wird es verhindert, dass die Granulatteilchen beim Einfüllen sofort durch die Durchtrittsöffnungen des Schmelzrostes hindurch fallen. Die Granulatteilchen liegen nach dem Einfüllen zuerst auf dem Schmelzrost auf und werden an ihrer Oberfläche angeschmolzen. Der an der Oberfläche der Granulatteilchen angeschmolzene Heißleim kann dann durch die Durchtrittsöffnungen abfließen, wobei der noch nicht aufgeschmolzene Kern der Granulatteilchen kontinuierlich kleiner wird. Die Granulatteilchen geben dadurch den Raum für nachrutschende noch nicht angeschmolzene Granulatteilchen frei, so dass auf dem Schmelzrost bei einer entsprechenden Nachfüllung immer eine Menge an noch nicht aufgeschmolzenen oder gerade an der Oberfläche aufschmelzenden Granulatteilchen aufliegt. Die von der Heizeinrichtung auf den Schmelzrost übertragene Wärmemenge kann dadurch sehr effektiv zum Aufschmelzen der Granulatteilchen an der Oberfläche genutzt werden, so dass der Aufschmelzvorgang beschleunigt werden kann. Außerdem kann durch eine große Öffnungsweite der Durchtrittsöffnungen der zur Verfügung stehende Abflussquerschnitt erhöht werden, so dass der geschmolzene Heißleim schneller abfließt und die Wahrscheinlichkeit des Aufstauens des Heißleims verringert wird.

Weiter wird vorgeschlagen, dass die Durchtrittsöffnungen durch ihre Anordnung ein Heizfeld bilden, und die Heizeinrichtung an der Außenseite des Heizfeldes angeordnet ist. Das Heizfeld dient dabei zur Auflage der Granulatteilchen und ist dazu so angeordnet und in der Fläche bemessen, dass die Granulatteilchen nach dem Einfüllen zumindest mit einer sehr hohen Wahrscheinlichkeit darauf zu liegen kommen. Ferner weist der Schmelzrost im Bereich des Heizfeldes aufgrund der Durchtrittsöffnungen insgesamt weniger aufzuheizendes Material und eine größere Wärmeübertragungsfläche auf, so dass das Heizfeld während des Schmelzvorganges als Wärmesenke mit einer besonders hohen Wärmeübertragung auf den aufzuschmelzenden Heißleim angesehen werden kann. Der Wärmefluss ist von der Außenseite zu der Mitte des Heizfeldes bzw. zu der Mitte des Schmelzrostes hin gerichtet ist. Durch die Ausbildung des Heizfeldes und die vorgeschlagene Anordnung der Heizeinrichtung kann die Wärme besonders effizient zum Aufschmelzen genutzt und der Aufschmelzvorgang insgesamt weiter beschleunigt werden.

Dieser Effekt tritt besonders wirkungsvoll ein, wenn das Heizfeld kreisförmig und die Heizeinrichtung ringförmig ausgebildet ist, da in diesem Fall ein eindeutiges Zentrum nämlich der Mittelpunkt des Heizfeldes vorhanden ist, zu dem die Wärme während des Aufschmelzens des Heißleims punktsymmetrisch hin fließt.

Weiter wird vorgeschlagen, dass die Heizeinrichtung strangförmig ausgebildet. Strangförmig ist dabei so zu verstehen, dass die Heizeinrichtung in Bezug zu ihrer Querschnittsfläche eine sehr große Länge aufweist. Die Heizeinrichtung kann dadurch eine verhältnismäßig große Fläche des Schmelzrostes erwärmen, ohne selbst einen hohen Flächenbedarf aufzuweisen. Insbesondere kann die Heizeinrichtung auch zwischen den Platten in einem Befestigungsabschnitt des Schmelzrostes angeordnet sein, so dass die zur Verfügung stehende Fläche des Schmelzrostes mit den Durchtrittsöffnungen zum Aufschmelzen des Heißleims möglichst groß gewählt werden kann.

Weiter wird vorgeschlagen, dass ein länglicher Temperatursensor vorgesehen ist, welcher in dem Schmelzrost angeordnet ist und von der Außenseite zu der Mitte des Schmelzrostes hin ausgerichtet ist. Durch den Temperatursensor kann die Temperatur des Schmelzrostes in einem mittleren Bereich, d.h. in einem Bereich, in dem der Heißleim aufliegt, für eine Steuerung oder Regelung des Aufschmelzvorganges gemessen werden. Durch die vorgeschlagene Ausbildung des Temperatursensors in länglicher Form und die Anordnung bzw. Ausrichtung des Temperatursensors kann die Temperatur des Schmelzrostes dabei besonders gut sensiert werden, ohne dass die zur Verfügung stehende Fläche des Schmelzrostes mit den Durchtrittsöffnungen unnötig verringert wird. Der Temperatursensor ragt dadurch fingerartig zur Mitte des Schmelzrostes hin und ermöglicht je nach der Länge eine Sensierung der Temperatur nahe der Mitte des Schmelzrostes, und bevorzugt an einer Stelle zwischen der Mitte und dem halben Radius des Schmelzrostes bei einer kreisförmigen Ausbildung desselben.

Ferner wird vorgeschlagen, dass eine zweite Heizvorrichtung vorgesehen ist, welche durch eine mittige Öffnung des Schmelzrostes hindurchragt, oder den Schmelzrost von der Mitte erwärmt. Durch die zweite Heizeinrichtung kann der Schmelzrost und/oder der Heißleim zusätzlich von der Mitte erwärmt werden, so dass der Wärmeeintrag in den Heißleim gleichmäßiger über die Fläche ausgebildet und insgesamt vergrößert werden kann. Weiterhin wird vorgeschlagen, dass eine Zuführeinrichtung vorgesehen ist, mit der der Heißleim in Granulatform portioniert zuführbar ist, und der Schmelzrost über einem Hohlraum eines Heißleimschmelzbehälters angeordnet ist, und die Zuführeinrichtung in Abhängigkeit von der Füllstandshöhe des Heißleims in dem Hohlraum ansteuerbar ist. Durch die vorgeschlagene Ansteuerung der Zuführeinrichtung kann die Menge des in den Hohlraum des Heißleimschmelzbehälters eingebrachten Heißleimgranulats derart gesteuert werden, dass in dem Hohlraum eine für den weiteren Verarbeitungsprozess optimale Menge an Heißleim vorhanden ist, wobei die Menge des Heißleimes ein Mengenbereich ist, welcher durch die Kapazität des Hohlraumes, den Heißleimmengenbedarf der nachfolgenden Auftragseinrichtung und der Heizleistung einer Heizeinrichtung des Heißleimschmelzbehälters bestimmt ist, sofern dieser eine solche aufweist.

Dazu wird insbesondere vorgeschlagen, dass in dem Hohlraum ein erster Temperatursensor vorgesehen ist, welcher derart angeordnet ist, dass dieser bei einem Unterschreiten einer vorbestimmten Füllstandshöhe des Heißleims in dem Hohlraum ein Signal erzeugt. Die vorbestimmte Füllstandshöhe entspricht einer Mindestheißleimmenge, welche nicht unterschritten werden sollte. Die Mindestheißleimmenge kann entweder durch den Bedarf einer nachfolgenden Auftragseinrichtung und einer den Heißleim abfördernden Leimpumpe vorgegeben sein, oder auch durch den Heißleimschmelzbehälter selbst vorgegeben sein, damit dieser z.B. eine kontinuierliche Weiterförderung des Heißleims ermöglicht und der Heißleim nicht auf zu hohe Temperaturen aufgeheizt wird.

Dabei werden bei beiden Lösungen bevorzugt Temperatursensoren verwendet, da die Temperatur des aufgeschmolzenen Heißleims in dieser Anwendung eine ideale der Sensierung der Füllstandshöhe zugrunde liegende Kenngröße ist. Die Temperatur variiert stark mit der sich verändernde Füllstandshöhe und zwar derart, dass die von dem Temperatursensor sensierte Temperatur erheblich größer ist, wenn der Füllstand der Heißleimmasse die Sensorfläche der Temperatursensoren überdeckt. Sinkt der Füllstand dagegen soweit, dass die Sensorflächen der Temperatursensoren nur noch von einem dünnen Film der Heißleimmasse bedeckt ist, oder sogar gänzlich freigegeben ist, ist die sensierte Temperatur an den Sensorflächen wesentlich geringer.

Weiter wird vorgeschlagen, dass zumindest eine der Platten des Schmelzrostes aus Aluminium ist. Aluminium besitzt eine sehr gute Wärmeleitfähigkeit, so dass die von der ersten Heizeinrichtung in den Schmelzrost eingebrachte Wärme sehr schnell weitergeleitet wird. Dabei ist es für einen schnellen Aufheizvorgang der Granulatteilchen in der Startphase wichtig, dass der Schmelzrost in der Mitte schnell aufgeheizt wird, was durch die Verwendung Aluminium als Werkstoff ermöglicht werden kann. Ferner kann die von der ersten Heizeinrichtung in die Granulatteilchen bzw. die aufzuschmelzende Heißleimmasse eingebrachte Wärme durch die gute Wärmeleitfähigkeit sehr gut und schnell gesteuert werden. Außerdem kann Aluminium spanend bearbeitet werden, was für die Herstellung der Platten und insbesondere für die Herstellung der Ausnehmung und der Durchtrittsöffnungen wichtig ist. Wichtig ist dabei, dass wenigstens eine der Platten aus Aluminium ist, da die Platten die maßgebenden Bauteile für die Wärmeleitfähigkeit des Schmelzrostes insgesamt sind.

Die Erfindung wird im Folgenden anhand bevorzugter Ausführungsformen unter Bezugnahme auf die beigefügten Figuren erläutert. Dabei zeigt:
- Fig. 1:: eine Heißleimschmelzvorrichtung mit einer Zuführeinrichtung;
- Fig. 2:: einen Heißleimschmelzbehälter mit einem Schmelzrost in Schnittdarstellung; und
- Fig. 3:: einen Schmelzrost.

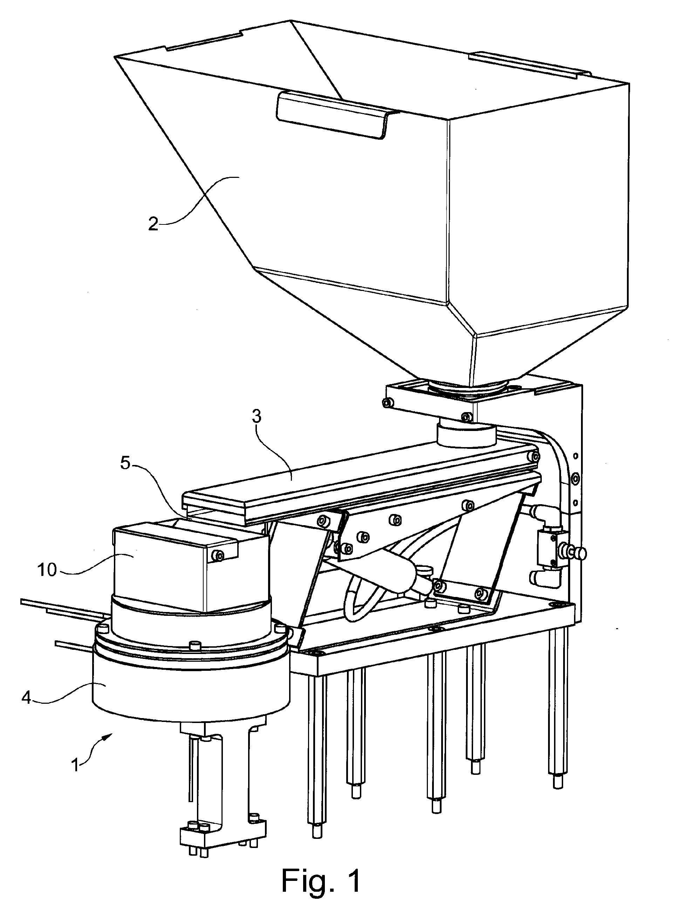

In der Figur 1 ist eine Heißleimschmelzvorrichtung 1 mit einer Zuführeinrichtung zu erkennen, welche einen Vorratsbehälter 2 und eine Vibrationsrinne 3 umfasst. Der Vorratsbehälter 2 dient zur Aufnahme von Heißleimgranulat in Form von Granulatteilchen mit maximalen Außenabmessungen von 2 bis 20 mm. Die Granulatteilchen können dabei in Kugelform oder beliebigen anderen tablettenähnlichen Formen vorliegen. Die Granulatteilchen werden aus dem Vorratsbehälter 2 auf die Vibrationsrinne 3 gegeben, welche geneigt ist und die Granulatteilchen durch eine Vibration abtransportiert. Die Neigung kann fest voreingestellt sein oder auch im Wege einer Steuerung veränderbar sein. Der Neigungswinkel und die Frequenz der Vibration stellen dabei die Parameter dar, von denen die Menge der abtransportierten Granulatteilchen je Zeiteinheit abhängt. Die Aufgabe der Granulatteilchen aus dem Vorratsbehälter 2 auf die Vibrationsrinne 3 erfolgt ebenfalls durch eine gesteuerte Aufgabeeinrichtung, wie z.B. über eine steuerbare Öffnung mit einer veränderbaren Öffnungsweite 4. Durch eine gekoppelte Ansteuerung der Vibrationsrinne 3 und der Aufgabeeinrichtung aus dem Vorratsbehälter 2 kann dabei verhindert werden, dass die Granulatteilchen auf der Vibrationsrinne 3 aufstauen. Die Steuerung der Vibrationsrinne 3 und/oder der Aufgabeeinrichtung aus dem Vorratsbehälter 2 wird nachfolgend als Steuerung der Zuführeinrichtung bezeichnet.

Von der Vibrationsrinne 3 aus fallen die Granulatteilchen über einen Einfüllkasten 10 in einen Heißleimschmelzbehälter 4 der Heißleimschmelzvorrichtung 1. Die Vibrationsrinne 3 ist kontaktlos zu dem Einfüllkasten 10 mit einem Spalt 5 angeordnet, so dass die Vibrationsrinne 3 selbst nicht erwärmt wird und außerdem ungehindert die Schwingbewegung ausführen kann.

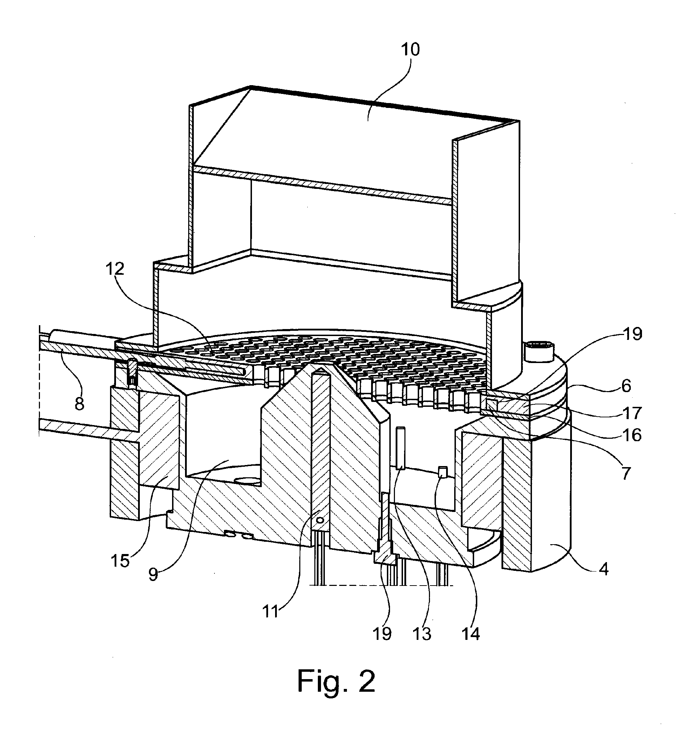

In der Figur 2 ist der Heißleimschmelzbehälter 4 der Heißleimschmelzvorrichtung 1 geschnitten und vergrößert dargestellt. Der Heißleimschmelzbehälter 4 weist einen ringförmigen Hohlraum 9 auf, welcher an der Oberseite durch einen Schmelzrost 6 abgedeckt ist. Der Schmelzrost 6 ist zwischen einem ringförmigen Flansch des Einfüllkastens 10 und der Wandung des Heißleimschmelzbehälters 4 eingespannt, und weist eine kreisförmige Heizfläche, gebildet durch eine Vielzahl von Durchtrittsöffnungen 12, auf. Der Schmelzrost 6 ist gebildet aus zwei aufeinanderliegenden Platten 16 und 17, welche jeweils Teilabschnitte der Durchtrittsöffnungen 12 aufweisen, die in der übereinanderliegenden Anordnung der Platten 16 und 17 zueinander fluchten und sich zu den Durchtrittsöffnungen 12 ergänzen. In der Platte 17 ist eine Ausnehmung 19 vorgesehen, in der eine erste strang- und ringförmige Heizeinrichtung 7 angeordnet ist, welche das Heizfeld an der Außenseite umgibt. Ferner ist in der Platte 17 ein von der Außenseite zu der Mitte hin gerichteter Temperatursensor 8 vorgesehen. In der Mitte des Hohlraumes 9 ist eine zweite Heizeinrichtung 11 vorgesehen, welche von dem Boden des Heißleimschmelzbehälters 4 nach oben gerichtet ist und eine mittige Öffnung des Schmelzrostes 6 durchgreift.

Es ist aber auch denkbar die zweite Heizeinrichtung 11 nicht vorzusehen und stattdessen den Schmelzrost 6 ohne eine Öffnung mit einer in der Fläche vergrößerten Heizfläche auszuführen. Dadurch kann außerdem das Fassungsvermögen des Heißleimschmelzbehälters 4 bei gleichen Außenabmessungen vergrößert werden, oder es können im Umkehrschluss die Außenabmessungen des Heißleimschmelzbehälters 4 bei gleichem Fassungsvermögen verkleinert werden. Der Hohlraum 9 wäre dann nicht ringförmig, sondern stattdessen zylindrisch. Ferner kann die zweite Heizeinrichtung 11 auch in einem kürzeren zentralen Vorsprung angeordnet sein, welcher sich nicht vollständig bis zu dem Schmelzrost 6 bzw. durch den Schmelzrost 6 erstreckt.

In der äußeren Wandung des Heißleimschmelzbehälters 4 ist ferner eine weitere dritte Heizeinrichtung 15 vorgesehen, welche die größte Heizleistung aufweist. Die dritte Heizeinrichtung 15 dient zum Aufschmelzen von erkaltetem Heißleim und zum Halten der Temperatur bzw. zum weiteren Aufheizen des aufgeschmolzenen Heißleims. In dem Hohlraum 9 des Heißleimschmelzbehälters 4 sind zwei von dem Boden nach oben gerichtete Temperatursensoren 13 und 14 unterschiedlicher Länge angeordnet, deren Sensorflächen in einer unterschiedlichen Höhe angeordnet sind oder in unterschiedlichen Höhen enden. Ferner ist nahe der zweiten Heizeinrichtung 11 ein weiterer Temperatursensor 19 vorgesehen.

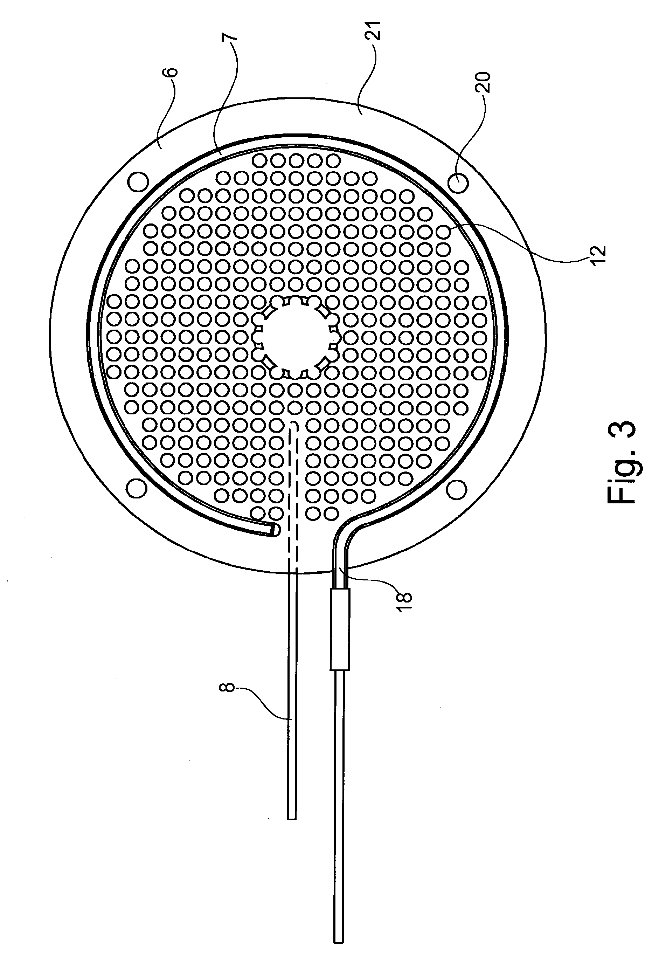

In der Figur 3 ist der Schmelzrost 6 von oben zu erkennen. Die Durchtrittsöffnungen 12 bilden in der Gesamtheit durch ihre Anordnung eine in etwa kreisförmige Heizfläche, welche von der ringförmigen ersten Heizeinrichtung 7 außenseitig umfasst ist. Die erste Heizeinrichtung 7 ist in Form eines nicht geschlossenen Ringes ausgeführt und mit einem radial nach außen abragenden Anschluss 18 versehen. Der Anschlüsse 18 und das Ende der ersten Heizeinrichtung 7 sind beabstandet, so dass ein Spalt geschaffen ist, durch den der Temperatursensor 8 von außen zu der Mitte des Schmelzrostes 6 hin ragt. Der Temperatursensor 8 ist als länglicher schmaler Finger ausgebildet, so dass die Fläche des Heizfeldes mit den Durchtrittsöffnungen 12 nicht unnötig eingeschränkt wird, und eine Sensierung der Temperatur in einem mittleren Abschnitt des Schmelzrostes 6 möglich ist. Der Temperatursensor 8 ist dazu in der Länge so bemessen, dass er in etwa der Hälfte des Radius des Schmelzrostes 6 endet. Aufgrund der Anordnung dient das Signal des Temperatursensors 8 zur Ansteuerung der ersten Heizeinrichtung 7, das Signal des Temperatursensors 19 zur Ansteuerung der zweiten Heizeinrichtung 11 und das Signal des Temperatursensors 14 zur Ansteuerung der dritten Heizeinrichtung 15.

In der äußeren Ringfläche 21 des Schmelzrostes 6 sind keine Durchtrittsöffnungen 12 vorgesehen, sondern stattdessen nur 4 Durchgangsbohren 20, zur Durchführung von jeweils einer Befestigungsschraube. Außerdem ist in der Ringfläche 21 die erste Heizeinrichtung 7 angeordnet. Die Ringfläche 21 bildet den Einspannbereich des Schmelzrostes 6 zwischen dem Flansch des Einfüllkastens 10 und der Wandung des Heißleimschmelzbehälters 4, so dass nach dem Einbau des Schmelzrostes 6 auf der Ringfläche 21 keine Granulatteilchen aufliegen. Damit zählt die Ringfläche 21 nicht zur Heizfläche des Schmelzrostes 6. Da die Heizeinrichtung 7 bewusst in der Ringfläche 21, also in dem zwischen dem Flansch des Einfüllkastens 10 und der Wandung des Heißleimschmelzbehälters 4 eingespannten Befestigungsabschnitt, angeordnet ist, wird die Heizfläche mit den Durchtrittsöffnungen 12 durch die Heizeinrichtung 7 nicht unnötig in der Fläche eingeschränkt.

Nachfolgend wird der Aufschmelzvorgang des Heißleimgranulats im Detail beschrieben. Zunächst wird bei einer Ansteuerung der Zuführeinrichtung eine Menge von Granulatteilchen des Heißleims über die Vibrationsrinne 3 in den Einfüllkasten 10 eingefüllt. Die Granulatteilchen weisen Außenabmessungen auf welche entsprechend so bemessen sind, dass sie nicht durch die Durchtrittsöffnungen 12 hindurch fallen, sondern stattdessen auf dem Schmelzrost 6 liegen bleiben. Der Schmelzrost 6 wird durch die erste Heizeinrichtung 7 erwärmt, so dass die aufliegenden Granulatteilchen an der Oberfläche angeschmolzen werden. Der aufgeschmolzene flüssige Heißleim fließt dann durch die Durchtrittsöffnungen 12 in den Hohlraum 9 des Heißleimschmelzbehälters 4. Insgesamt tropft demnach eine Masse an aufgeschmolzenen Heißleim durch die Durchtrittsöffnungen 12. Da die durch die Durchtrittsöffnungen 12 hindurchtropfende Masse die Oberfläche des Schmelzrostes 6 bzw. den Raum oberhalb des Schmelzrostes 6 freigibt, können gleichzeitig neue Granulatteilchen auf den Schmelzrost 6 nachrutschen, welche dann in gleicher Weise aufgeschmolzen werden.

Sofern die zweite Heizeinrichtung 11 in der Mitte des Schmelzrostes 6 vorgesehen ist, kann der An- und Aufschmelzvorgang bei identischer maximaler Aufschmelztemperatur weiter beschleunigt werden, da der Schmelzrost 6 bzw. die Granulatteilchen zusätzlich von der Mitte her erwärmt werden, wodurch die Temperaturverteilung zusätzlich vergleichmäßigt wird.

In dem Hohlraum 9 des Heißleimschmelzbehälters 4 wird die Heißleimmasse und die noch vorhandenen festen Granulatpartikel mittels der dritten in der Wandung des Heißleimschmelzbehälters 4 angeordneten Heizeinrichtung 15 zu einer homogenen Masse aufgeschmolzen und weiter erhitzt. Die dritte Heizeinrichtung 15 kann darüber hinaus auch zum Aufschmelzen von erkaltetem Heißleim von einem vorausgegangenen Betreib der Heißleimschmelzvorrichtung genutzt werden. Aus dem Hohlraum 9 wird der aufgeschmolzene Heißleim schließlich mittels einer nicht dargestellten Leimpumpe abgepumpt und einer nachfolgenden Auftragseinrichtung zugeführt.

In dem Hohlraum 9 sind die Temperatursensoren 13 und 14 mit einer unterschiedlichen Länge vorgesehen, welche aufgrund ihrer unterschiedlichen Länge Sensorflächen aufweisen, die in einer unterschiedlichen Höhe des Hohlraumes 9 angeordnet sind. Für den Fall, dass die Füllstandshöhe an aufgeschmolzenen Heißleim die Sensorfläche des Temperatursensors 14 unterschreitet, wird automatisch die Zuführeinrichtung angesteuert, so dass neue Granulatteilchen in den Einfüllkasten 10 nachgefüllt werden.

In jedem Fall kann durch die Kombination der beiden Heizeinrichtung 7 und 15 der Aufschmelzvorgang auf identischen oder sogar geringeren Temperaturniveau und erheblich schneller vollzogen werden, als dies mit der bisher verwendeten einen Heizeinrichtung möglich war. Aufgrund des schnelleren Aufschmelzvorganges kann der Hohlraum 9 in dem Heißleimschmelzbehälter 4 bei gleicher aufzuschmelzenden Heißleimmenge je Zeiteinheit kleiner bemessen werden, so dass z.B. die Kosten geringer sind und die Rückstände an Heißleim in dem Hohlraum 9 nach dem Abschalten der Heißleimschmelzvorrichtung 1 kleiner sind. Insgesamt kann der Aufschmelzvorgang dadurch auch qualitativ verbessert werden, da dieser schneller aber mit geringeren Temperaturen verwirklicht werden kann. Aufgrund der geringeren Temperaturen kann der Heißleim mit einer geringeren Wahrscheinlichkeit des "crackens" aufgeschmolzen werden, so dass die Wahrscheinlichkeit von Verfärbungen der mit dem Heißleim verklebten Produkte verringert werden kann.

Der Schmelzrost 6 selbst ist konstruktiv besonders einfach aufgebaut, da die Heizeinrichtung 7 nur in die Ausnehmung 19 eingelegt werden muss und beim Zusammenbau der Heißleimschmelzvorrichtung 1 durch Auflegen der Platte 16 auf einfache Art zwischen den Platten 16 und 17 also in dem Schmelzrost 6 fixiert ist. Nach dem Zusammensetzen des Schmelzrostes 6 wird dieser auf die Wandung des Heißleimschmelzbehälters 4 aufgelegt und durch Befestigen des Einfüllkastens 10 über den Ringflansch und die Befestigungsschrauben montiert.

Die Platte 17 ist dicker als die Platte 16, damit diese die erforderliche Wandstärke zur Anordnung der Ausnehmung 19 aufweist, welche bevorzugt 3 bis 8 mm beträgt. Die Platte 16 kann dagegen erheblich dünner ausgeführt werden und dient lediglich als Deckel zum Verschluss der Ausnehmung 19 mit der darin angeordneten Heizeinrichtung 7. Da die Platten 16 und 17 zwischen dem Flansch des Einfüllkastens 10 und der Wandung des Heißleimschmelzbehälters 4 eingespannt werden bedürfen sie keiner gesonderten Befestigung zur gegenseitigen Fixierung. Damit die Platten 16 und 17 in der vorbestimmten Ausrichtung zueinander angeordnet sind, und sich die Teilabschnitte der Durchtrittsöffnungen in fluchtender Anordnung zu den Durchtrittsöffnungen 12 ergänzen, können die Platten 16 und 17 eine mechanische Codierung aufweisen, welche das Zusammensetzen der Platten 16 und 17 in ausschließlich einer einzigen Ausrichtung zueinander ermöglicht. Wenigstens eine der Platten 16 und 17 ist aus Aluminium ausgebildet, so dass die Wärme aufgrund der großen Wärmeleitfähigkeit des Aluminiums sehr schnell von der ersten Heizeinrichtung 7 zu der Mitte des Schmelzrostes 6 hin transportiert wird. Zweckmäßigerweise sind aber beide Platten 16 und 17 aus Aluminium damit möglichst keine Wärmespannungen in dem Schmelzrost 6 bedingt durch unterschiedliche Wärmeausdehnungskoeffizienten erzeugt werden und außerdem eine größtmögliche Wärmemenge transportiert werden kann.

Dabei wird der Aufschmelzvorgang durch die durch die Durchtrittsöffnungen 12 vergrößerte Oberfläche beschleunigt. Außerdem ermöglicht der Schmelzrost 6 durch den abfließenden aufgeschmolzenen Heißleim einen geringeren Abstand zwischen der Heizeinrichtung 7 bzw. dem die Wärme einbringenden Schmelzrost 6 und den aufzuschmelzenden Granulatteilchen, so dass diese schneller aufgeschmolzen werden. Dabei ist der Schmelzrost 6 aufgrund der Ausbildung des Heizfeldes mit den Durchtrittsöffnungen 12 und der die Durchtrittsöffnungen 12 bzw. das Heizfeld umfassenden ersten Heizeinrichtung 7 besonders effektiv, da durch die Durchtrittsöffnungen 12 in der Gesamtheit eine großen Abflussquerschnitt bei einer gleichzeitig großen Oberfläche zur Übertragung der Wärme geschaffen wird, welche durch die außenseitig angeordnete erste Heizeinrichtung 7 nicht unnötig eingeschränkt wird.

## Patentansprüche

1. Heißleimschmelzvorrichtung (1) mit
- einem Heißleimschmelzbehälter (4) zur Aufnahme von Heißleim, welcher zur Verklebung von Filterpapier in Produkten der Tabak verarbeitenden Industrie, insbesondere in Filtern, vorgesehen ist, und
- einem Schmelzrost (6) mit einer Vielzahl von Durchtrittsöffnungen (12) und einer ersten den Heißleim erhitzenden Heizeinrichtung (7),
**dadurch gekennzeichnet, dass**
- der Schmelzrost (6) aus zwei übereinander angeordneten Platten (16,17) gebildet ist, und
- eine der Platten (16,17) wenigstens eine Ausnehmung (19) aufweist, in der die Heizeinrichtung (7) angeordnet ist, und die jeweils andere Platte (16) die Ausnehmung (19) mit der darin angeordneten Heizeinrichtung (7) abdeckt.

2. Heißleimschmelzvorrichtung nach Anspruch 1, **dadurch gekennzeichnet, dass**
- der Heißleim in Form von Granulatteilchen zugeführt wird, und die Durchtrittsöffnungen (12) eine Öffnungsweite aufweisen, welche dem 0,3 bis 0,8-fachen der kleinsten Abmessung der Granulatteilchen entspricht.

3. Heißleimschmelzvorrichtung nach Anspruch 1 oder 2, **dadurch gekennzeichnet, dass**
- die Durchtrittsöffnungen (12) durch ihre Anordnung ein Heizfeld bilden, und
- die Heizeinrichtung (7) an der Außenseite des Heizfeldes angeordnet ist.

4. Heißleimschmelzvorrichtung nach Anspruch 3, **dadurch gekennzeichnet, dass**
- das Heizfeld kreisförmig ist und
- die Heizeinrichtung (7) ringförmig ausgebildet ist.

5. Heißleimschmelzvorrichtung nach einem der vorangegangenen Ansprüche, **dadurch gekennzeichnet, dass**
- die Heizeinrichtung (7) strangförmig ausgebildet.

6. Heißleimschmelzvorrichtung nach einem der vorangegangenen Ansprüche, **dadurch gekennzeichnet, dass**
- ein länglicher Temperatursensor (8) vorgesehen ist, welcher in dem Schmelzrost (6) angeordnet ist und von der Außenseite zu der Mitte des Schmelzrostes (6) hin ausgerichtet ist.

7. Heißleimschmelzvorrichtung nach einem der vorangegangenen Ansprüche, **dadurch gekennzeichnet, dass**
- eine zweite Heizvorrichtung (11) vorgesehen ist, welche durch eine mittige Öffnung des Schmelzrostes (6) hindurchragt oder den Schmelzrost (6) von der Mitte erwärmt.

8. Heißleimschmelzvorrichtung nach einem der vorangegangenen Ansprüche, **dadurch gekennzeichnet, dass**
- eine Zuführeinrichtung vorgesehen ist, mittels derer der Heißleim in Granulatform portioniert zuführbar ist, und
- der Schmelzrost (6) über einem Hohlraum (9) eines Heißleimschmelzbehälters (4) angeordnet ist, und
- die Zuführeinrichtung in Abhängigkeit von der Füllstandshöhe des Heißleims in dem Hohlraum (9) ansteuerbar ist.

9. Heißleimschmelzvorrichtung nach Anspruch 8, **dadurch gekennzeichnet, dass**
- in dem Hohlraum (9) ein erster Temperatursensor (14) vorgesehen ist, welcher derart angeordnet ist, dass dieser bei einem Unterschreiten einer vorbestimmten Füllstandshöhe des Heißleims in dem Hohlraum (9) ein Signal erzeugt.

10. Heißleimschmelzvorrichtung nach einem der vorangegangenen Ansprüche, **dadurch gekennzeichnet, dass**
- zumindest eine der Platten (16,17) des Schmelzrostes (6) aus Aluminium ist.

## Claims

1. Hot glue melting device (1) comprising
- a hot glue melting container (4) for receiving hot glue that is provided for bonding filter paper in products of the tobacco processing industry, in particular in filters, and
- a melting grate (6) comprising a plurality of through openings (12) and a first heating device (7) heating the hot glue,
**characterized in that**
- the melting grate (6) is formed from two plates (16, 17) which are arranged on top of each other, and
- one of the plates (16, 17) comprises at least one recess (19) in which the heating device (7) is located, and the respective other plate (16) covers the recess (19) together with the heating device (7) arranged therein.

2. Hot glue melting device according to claim 1, **characterized in that**
- the hot glue is supplied in the form of granular particles, and the through openings (12) have an opening width which corresponds to 0.3 to 0.8 times the smallest dimension of the granular particles.

3. Hot glue melting device according to claim 1 or 2, **characterized in that**
- the through openings (12) due to their arrangement form a heating field, and
- the heating device (7) is located on the outer side of the heating field.

4. Hot glue melting device according to claim 3, **characterized in that**
- the heating field is circular and
- the heating device (7) is designed to be ring-shaped.

5. Hot glue melting device according to any one of the preceding claims, **characterized in that**
- the heating device (7) is designed to be string-shaped.

6. Hot glue melting device according to any one of the preceding claims, **characterized in that**
- an elongated temperature sensor (8) is provided, which is located in the melting grate (6) and is oriented from the outer side towards the centre of the melting grate (6).

7. Hot glue melting device according to any one of the preceding claims, **characterized in that**
- a second heating device (11) is provided, which extends through a central opening of the melting grate (6) or heats the melting grate (6) from the centre.

8. Hot glue melting device according to any one of the preceding claims, **characterized in that**
- a supply device is provided, by which the hot glue in granular form can be supplied in portions, and
- the melting grate (6) is located above a hollow space (9) of a hot glue melting container (4), and
- the supply device can be controlled depending on the filling level of the hot glue in the hollow space (9).

9. Hot glue melting device according to claim 8, **characterized in that**
- a first temperature sensor (14), which is arranged in such a way that it generates a signal in case the filling level of the hot glue in the hollow space (9) falls below a predetermined value, is provided in the hollow space (9).

10. Hot glue melting device according to any one of the preceding claims, **characterized in that**
- at least one of the plates (16, 17) of the melting grate (6) is made of aluminium.

## Revendications

1. Dispositif de fusion d'un adhésif thermofusible (1), comportant :
- un récipient (4) pour la fusion d'un adhésif thermofusible, destiné à recevoir l'adhésif thermofusible qui est prévu pour coller un papier pour filtre dans des produits de l'industrie de traitement du tabac, en particulier dans des filtres, et
- une grille de fusion (6), comportant un grand nombre d'ouvertures de passage (12) et un dispositif de chauffage (7) chauffant l'adhésif thermofusible, **caractérisé en ce que**
- la grille de fusion (6) est formée de deux plaques (16, 17) disposées l'une au-dessus de l'autre, et
- l'une des plaques (16, 17) comprend au moins un évidement (19), dans lequel est disposé le dispositif de chauffage (7), l'autre plaque (16) recouvrant l'évidement (19) avec le dispositif de chauffage (7) qui y est disposé.

2. Dispositif de fusion d'un adhésif thermofusible selon la revendication 1, **caractérisé en ce que**
- l'adhésif thermofusible est amené sous forme de particules de granulés, et les ouvertures de passage (12) présentent un diamètre d'ouverture qui correspond à 0,3 à 0,8 fois la dimension la plus petite des particules de granulés.

3. Dispositif de fusion d'un adhésif thermofusible selon la revendication 1 ou 2, **caractérisé en ce que**
- les ouvertures de passage (12) forment, du fait de leur disposition, une zone de chauffage, et
- le dispositif de chauffage (7) est disposé sur la face extérieure de la zone de chauffage.

4. Dispositif de fusion d'un adhésif thermofusible selon la revendication 3, **caractérisé en ce que**
- la zone de chauffage est circulaire, et
- le dispositif de chauffage (7) a une configuration annulaire.

5. Dispositif de fusion d'un adhésif thermofusible selon l'une des revendications précédentes, **caractérisé en ce que**
- le dispositif de chauffage (7) est configuré en forme de boudin.

6. Dispositif de fusion d'un adhésif thermofusible selon l'une des revendications précédentes, **caractérisé en ce que**
- un capteur de température (8) oblong est prévu, qui est disposé dans la grille de fusion (6), et qui est orienté de la face extérieure vers le milieu de la grille de fusion (6).

7. Dispositif de fusion d'un adhésif thermofusible selon l'une des revendications précédentes, **caractérisé en ce que**
- un deuxième dispositif de chauffage (11) est prévu, qui dépasse d'une ouverture centrale de la grille de fusion (6), ou chauffe la grille de fusion (6) à partir du milieu.

8. Dispositif de fusion d'un adhésif thermofusible selon l'une des revendications précédentes, **caractérisé en ce que**
- un dispositif d'amenée est prévu, à l'aide duquel l'adhésif thermofusible peut être amené par portions sous forme de granulés, et
- la grille de fusion (6) est disposée au-dessus d'un espace creux (9) d'un récipient (4) pour la fusion d'un adhésif thermofusible, et
- le dispositif d'amenée peut être piloté en fonction du niveau de l'adhésif thermofusible dans l'espace creux (9).

9. Dispositif de fusion d'un adhésif thermofusible selon la revendication 8, **caractérisé en ce que**
- un premier capteur de température (14) est prévu dans l'espace creux (9), capteur qui est disposé de façon à produire un signal quand le niveau de l'adhésif thermofusible dans l'espace creux (9) passe en-dessous d'une valeur prédéterminée.

10. Dispositif de fusion d'un adhésif thermofusible selon l'une des revendications précédentes, **caractérisé en ce que**
- au moins l'une des plaques (16, 17) de la grille de fusion (6) est en aluminium.
